# EUROPÄISCHE PATENTSCHRIFT

(11) **EP 2 354 602 B1**
(45) Veröffentlichungstag und Bekanntmachung des Hinweises auf die Patenterteilung: **16.09.2015**
(21) Anmeldenummer: 11151824.7
(22) Anmeldetag: 24.01.2011
(51) Int. Cl.: F16H 63/32, F16D 23/04, F16D 23/06

(54) **Betätigungsvorrichtung für ein Zahnräderwechselgetriebe**
Activation device for a gearwheel transmission
Dispositif d'actionnement pour une boîte de vitesses à engrenages

(30) Priorität: 01.02.2010 DE 102010006424
(43) Veröffentlichungstag der Anmeldung: 10.08.2011
(73) Patentinhaber: Schaeffler Technologies AG & Co. KG, 91074 Herzogenaurach (DE)
(72) Erfinder: Schwarz, Uwe, 91052, Erlangen (DE); Feuerbach, Matthias, 97070, Würzburg (DE)

(56) Entgegenhaltungen:
- DE-A1-102007 062 307
- DE-A1-102008 006 843
- GB-A- 2 036 206

## Beschreibung

### Gebiet der Erfindung

Die Erfindung betrifft eine Betätigungsvorrichtung für ein Zahnräderwechselgetriebe, mit der mindestens ein Synchronring einer Synchronisiereinrichtung in Achsrichtung einer Welle verschiebbar ist, wobei die Betätigungsvorrichtung ein gabelförmiges und axial verschiebbar gelagertes Betätigungselement aufweist, das ein mit mindestens einer Wälzlagerung versehenes Andruckelement axial verschieben kann.

### Hintergrund der Erfindung

Eine Betätigungsvorrichtung der gattungsgemäßen Art ist aus der DE 10 2007 062 307 A1 bekannt. Eine Solche Vorrichtung wird benötigt, um in einem Zahnräderwechselgetriebe einen Gangwechsel vorzunehmen. Sowohl in manuellen als auch in automatisierten Getrieben sind zwischen zwei Gangrädern, die drehbar auf einer Getriebewelle gelagert sind, ein Synchronkörper und eine Schiebemuffe angeordnet. Die Schiebemuffe ist mit einer Innenverzahnung versehen, die in eine in den Synchronkörper eingebrachte Außenverzahnung eingreift. Der Synchronkörper ist drehfest mit der Getriebewelle verbunden. Beim Schalten eines Ganges wird die Schiebemuffe in axialer Richtung auf eines der Gangräder zu verschoben, bis ihre Innenverzahnung in eine am Gangrad angebrachte Kupplungsverzahnung eingreift. Die Innenverzahnung der Schiebemuffe steht dann sowohl mit der Kupplungsverzahnung als auch mit der Außenverzahnung des Synchronkörpers in Eingriff. Das Schaltelement hat dabei die Aufgabe, die axiale Bewegung von einem Schaltgestänge auf die Schiebemuffe zu übertragen, wozu die Schaltgabel axial verschiebbar auf einer Schaltwelle bzw. auf einer Schaltstange gelagert ist und mit Mitnehmern in eine Führungsnut der Schiebemuffe eingreift.

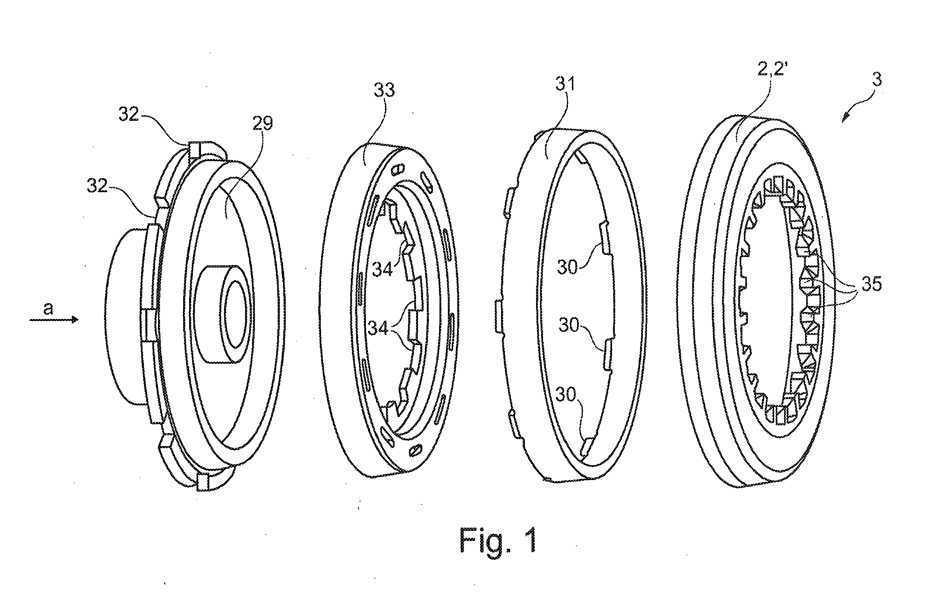

Dieses Prinzip gilt auch, wenn ein Zahnräderwechselgetriebe eine etwas andere Bauart aufweist, wie es in Fig. 1 skizziert ist. Hier sind insgesamt vier ringförmige Bauteile in Explosionsdarstellung dargestellt, die im Betrieb zusammenwirken und eine Synchronisationseinrichtung 3 darstellen. Ein Konus 29 ist radial und axial fest mit einem Losrad verbunden. Im zusammenwirkenden Zustand ragen die Zapfen 30 eines axial verschiebbaren Zwischenrings 31 in Nuten 32 des Konus 29. Ein Innenring 33 und ein Außenring 2 (Synchronring) sind über eine Verzahnung 34 und 35 axial verschiebbar auf einer nicht dargestellten Nabe radial fixiert, wobei die Nabe wiederum mit einer nicht dargestellten Antriebswelle fest verbunden ist.

Wird ein axialer Druck auf den Außenring 2 ausgeübt, entsteht wie bei Synchronringen in klassischen Getrieben ein Reibschluss, so dass der Konus 29 und der Zwischenring 31 die gleiche Drehzahl annehmen wie der Innenring 33 und der Außenring 2.

Für einen zuverlässigen Betrieb eines solchen Getriebes ist ein Betätigungsmechanismus erforderlich, mit dem auf den Außenring 2 über eine längere Zeit in axialer Richtung eine Kraft ausgeübt werden kann.

Vorbekannte Betätigungsvorrichtungen, wie beispielsweise in der DE 10 2007 062 307 A1 beschrieben, können diese Anforderung nicht optimal erfüllen. Dies gilt insbesondere im Lichte dessen, dass die vorbekannte Vorrichtung einen relativ großen axialen Bauraum benötigt und somit nur schwierig zwischen zwei konischen Außenringen der in Fig. 1 dargestellten Art angeordnet werden kann. Nachteilig ist es ferner, dass der Außenring bei der genannten vorbekannten Lösung eine Nut im Außenumfang aufweisen muss, in die das Betätigungselement eingreift. Für die bei der vorbekannten Vorrichtung zum Einsatz kommenden Rillenkugellager stellen ferner die auftretenden Kräfte eine ungünstige Belastungssituation dar. Schließlich ist es bei der vorbekannten Lösung auch nicht sehr einfach, die Anordnung zu montieren, da die Einheit in einen Radsatz integriert sein muss.

Eine gattungsgemäße Betätigungsvorrichtung ist in DE 10 2008 006 843 A1 offenbart.

### Aufgabe der Erfindung

Der vorliegenden Erfindung liegt daher die Aufgabe zugrunde, eine Betätigungsvorrichtung für ein Zahnräderwechselgetriebe der eingangs genannten Art so auszubilden, dass die genannten Nachteile vermieden werden können. Demgemäß soll sich die Betätigungsvorrichtung durch einen geringen axialen Bauraumbedarf auszeichnen. Weiterhin soll bei bestimmungsgemäßem Gebrauch eine optimale Belastung der Wälzkörper gewährleistet sein. Auch auf eine Nut im Außenring soll verzichtet werden können. Schließlich soll sich die Vorrichtung durch eine einfache Montage auszeichnen.

### Zusammenfassung der Erfindung

Die Lösung dieser Aufgabe durch die Erfindung ist dadurch gekennzeichnet, dass die Wälzlagerung in einem stirnseitigen Bereich des Andruckelements angeordnet und ausgebildet ist, so dass die Wälzkörper der Wälzlagerung direkt den Synchronring kontaktieren.

Das Andruckelement weist an seinen beiden Stirnseiten je eine Wälzlagerung auf. Es umfasst zwei scheibenförmige Bauteile, an deren voneinander abgewandten Stirnseiten je ein Satz Wälzkörper anliegt. Dabei kann jeder Satz Wälzkörper von einem als Käfig fungierenden scheibenförmigen Trägerelement gehalten werden. Die beiden scheibenförmigen Bauteile des Andruckelements werden durch einen Ring zusammengehalten, der einen sich in axiale Richtung erstreckenden zylindrischen Abschnitt sowie zwei sich radial erstreckende Abschnitte aufweist, die in den axialen Endbereichen des zylindrischen Abschnitts angeordnet sind. Der Ring ist dabei vorzugsweise durch einen Umform- oder Umbördelvorgang in seine endgültige Form gebracht.

Die Wälzlagerung ist dabei bevorzugt als Axialnadellager oder Axialzylinderrollenlager ausgebildet.

Die beiden scheibenförmigen Bauteile des Andruckelements weisen bevorzugt mindestens eine im Radialschnitt winkelförmige Abkantung auf. Hiermit kann das scheibenförmige Bauteil versteift werden, so dass es im Betrieb eine höhere Widerstandskraft gegen Verformungen aufweist.

Das scheibenförmige Trägerelement ist dabei bevorzugt mit radialem Spiel zwischen zwei Abkantungen angeordnet. Gleichermaßen ist bevorzugt vorgesehen, dass auch zwischen dem umbördelten Ring und den Wälzlagerungen ein axiales Spiel vorhanden ist. Damit wird sichergestellt, dass ein Rotieren des Wälzlagers relativ zum Andruckelement gewährleistet ist.

Das gabelförmige Betätigungselement und das Andruckelement sind bevorzugt mit einer formschlüssigen Verbindung miteinander lösbar verbunden.

Mit der vorgeschlagenen Lösung kann eine axial sehr klein bauende Betätigungsvorrichtung realisiert werden, die bevorzugt zwei benachbarte Synchronringe alternativ axial betätigt bzw. drückt. Der Synchronring muss hierbei keine Nut am Außenumfang aufweisen, wie das bislang der Fall ist. Die eingesetzten Axial-Nadel- oder -Zylinderrollenlager werden auch in optimaler Weise belastet.

Die Montage der Betätigungsvorrichtung gestaltet sich deshalb besonders einfach, weil das gabelförmige Betätigungselement eingebaut werden kann, nachdem die Andruckelemente samt Peripherie schon montiert sind.

Damit kann in vorteilhafter Weise bei einer Getriebeanordnung mit konischen Bauteilen in der Synchronisationseinrichtung Kraftschluss zwischen der Antriebswelle und einem Losrad hergestellt werden.

### Kurze Beschreibung der Figuren

In den Zeichnungen ist ein Ausführungsbeispiel der Erfindung dargestellt. Es zeigen:
- Fig. 1: in Explosionsdarstellung einen Teil eines Zahnräderwechselgetriebes mit einem axial zu beaufschlagendem Außenring,
- Fig. 2: in perspektivischer Darstellung eine Betätigungsvorrichtung zur Aufbringung einer Axialkraft auf den Außenring des Getriebes gemäß Fig. 1,
- Fig. 3: in perspektivischer Darstellung die Betätigungsvorrichtung gemäß Fig. 2, wobei beidseitig je ein axial zu beaufschlagender Außenring dargestellt ist,
- Fig. 4: in perspektivischer Darstellung einen vergrößerten Ausschnitt der Betätigungsvorrichtung, dargestellt im Radialschnitt,
- Fig. 5: in perspektivischer Darstellung die Betätigungsvorrichtung gemäß Fig. 2 ohne das gabelförmige Betätigungselement,
- Fig. 6: in perspektivischer Darstellung einen Ausschnitt der Betätigungsvorrichtung und
- Fig. 7: in perspektivischer Darstellung einen anderen Ausschnitt der Betätigungsvorrichtung.

### Ausführliche Beschreibung der Figuren

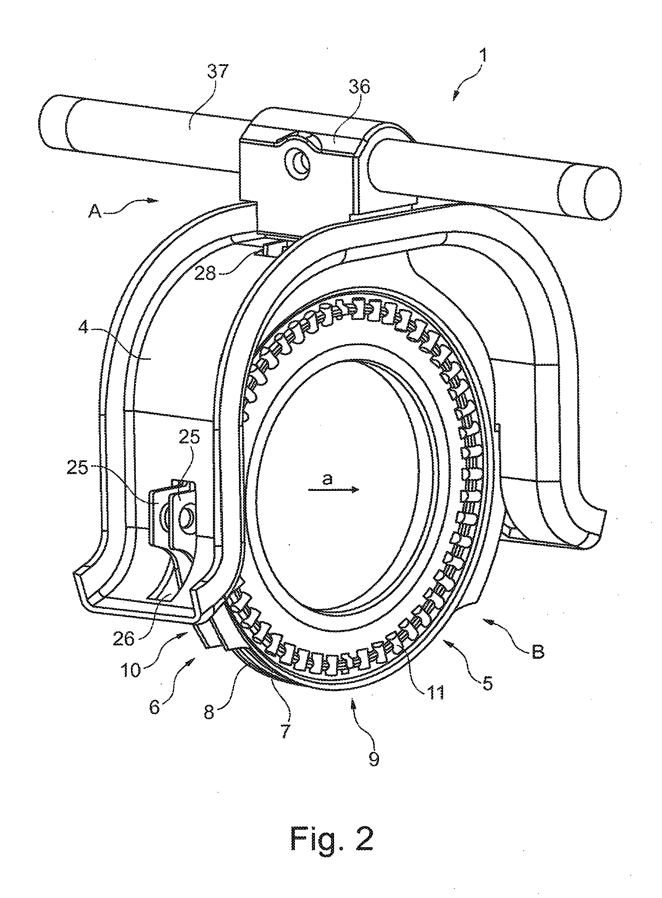

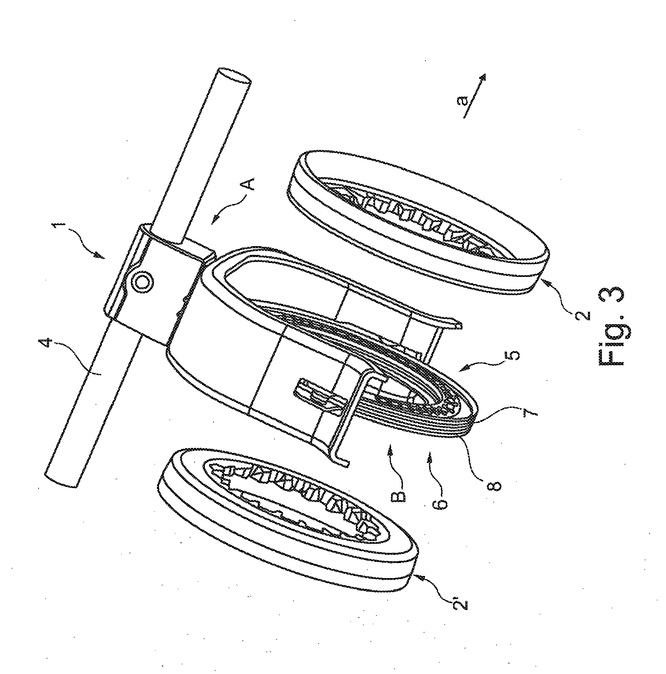

Die in Fig. 2 bis 7 skizzierte Betätigungsvorrichtung 1 dient zum Aufbringen einer axialen Kraft auf einen Synchronring 2 bzw. 2', d. h. auf einen Außenring einer Synchronisiereinrichtung 3, wie sie in Fig. 1 dargestellt und oben beschrieben ist. Die Betätigungsvorrichtung 1 umfasst ein gabelförmiges Betätigungselement 4, das mittels eines Lagerelements 36 auf einer Schaltstange 37 (s. Fig. 2) befestigt ist. Die gesamte Einheit 4, 36 und 37 kann in axiale Richtung a bewegt werden. Dabei können alternativ zwei Außenringe 2 bzw. 2' von der Betätigungsvorrichtung 1 mit einer Axialkraft beaufschlagt werden, wie es in Fig. 3 angedeutet ist.

Grundsätzlich kann man sagen, dass die vorgeschlagene Betätigungsvorrichtung 1 aus zwei Baugruppen A und B besteht: Die eine Baugruppe A ist das Betätigungselement 4 samt Lagerelement 36 und Schaltstange 37. Die andere Baugruppe B ist die in den Figuren 2 und 4 bis 7 weiterhin dargestellte Vorrichtungsteil, deren wesentlicher Bestandteil zwei Andruckelemente 7 und 8 sind, die jeweils zum genannten axialen Andrücken eines der Außenringe 2 bzw. 2' dienen.

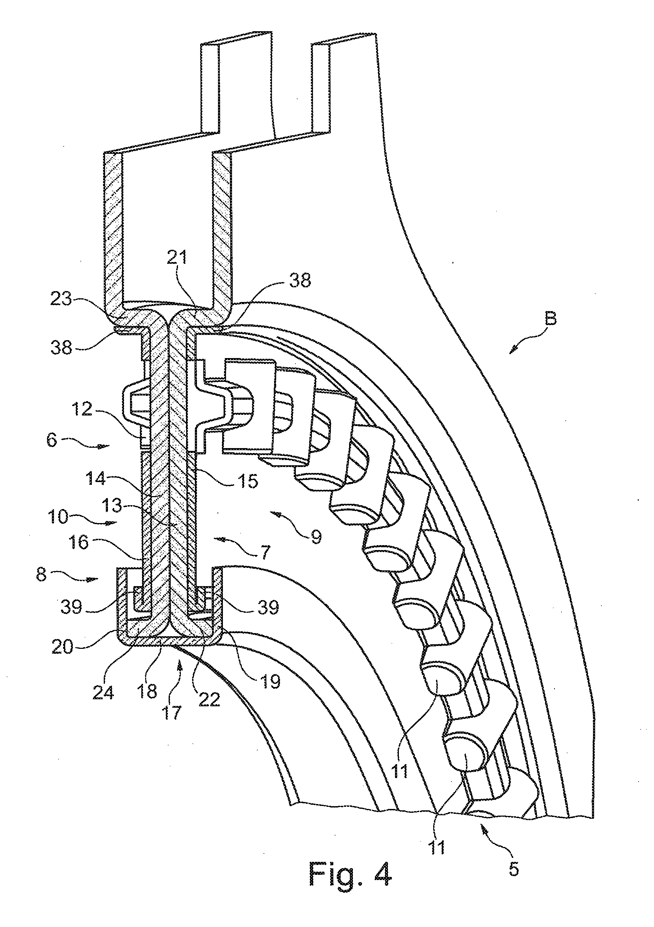

Der detaillierte Aufbau der Betätigungsvorrichtung 1 geht am besten aus Fig. 4 hervor, wobei sich im übrigen die Bezugszeichen in allen Figuren entsprechen.

Das Betätigungselement 1 umfasst zwei scheibenförmige Andruckelemente 7 und 8. In jedem stirnseitigen Bereich 9 bzw. 10 der Andruckelemente 7, 8 ist je eine Wälzlagerung 5 bzw. 6 in Form eines Axial-Nadellagers angeordnet. Die Wälzlagerung 5, 6 umfasst zylindrische Wälzkörper 11, 12, deren Drehachse auf die Achsmitte gerichtet ist.

Wie bereits erwähnt, besteht die Baugruppe B im wesentlich aus zwei Andruckelementen 7 und 8, die jeweils verschiedene Einzelteile umfassen und jeweils ausgebildet sind, um einen Synchronring 2 oder 2' mit einer axialen Andruckkraft zu beaufschlagen. Denkbar ist es grundsätzlich, dass nur ― in Abkehr von dem dargestellten Ausführungsbeispiel ― ein einzelnes Andruckelement 7 oder 8 vorgesehen wird, wenn nur ein Synchronring mit einer Axialkraft zu beaufschlagen ist.

Die Andruckelemente 7, 8 werden zu einem wesentlichen Teil durch scheibenförmige Bauteile 13 und 14 gebildet, die über eine gewisse radiale Erstreckung eben ausgebildet sind und lose aneinander liegen. Um die Steifigkeit der Andruckelemente 7, 8 zu erhöhen, sind in die scheibenförmigen Bauteile 13, 14 Abkantungen 21, 22, 23 und 24 eingebracht, wie es aus Fig. 4 ersichtlich ist. Die einzelnen Wälzkörper 11, 12 werden durch scheibenförmige Trägerelemente 15 und 16 in Position gehalten, d. h. die Elemente 15, 16 haben die Funktion eines Käfigs für die Wälzkörper 11, 12. Wie es in Fig. 4 gesehen werden kann, sind die scheibenförmigen Trägerelemente 15, 16 in einem radial äußeren Endbereich mit einem sich axial erstreckenden Abschnitt 38 versehen; in einem radial innenliegenden Endbereich ist am Trägerelement 15, 16 eine Umbiegung 39 angeordnet. Das Trägerelement 15, 16 liegt dabei so zwischen den Abkantungen 21 und 22 bzw. 23 und 24, dass etwas radiales Spiel für das Trägerelement 15, 16 vorhanden ist.

Die beiden scheibenförmigen Bauteile 13, 14 werden an ihrem radial innenliegenden Ende von einem Ring 17 umfasst und zusammengehalten. Der Ring 17 hat dabei einen zylindrischen Abschnitt 18, der auch als Lagerfläche auf einer nicht dargestellten Nabe dient. Dieser zylindrische Abschnitt 18 wird durch sich radial nach außen erstreckende Abschnitte 19 und 20 begrenzt.

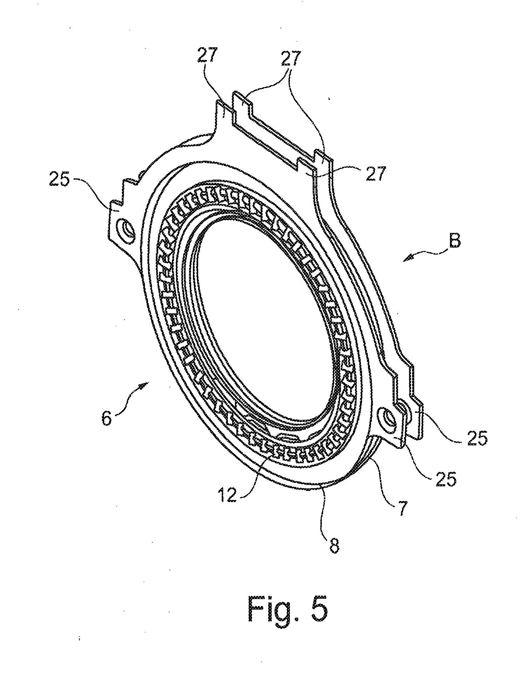

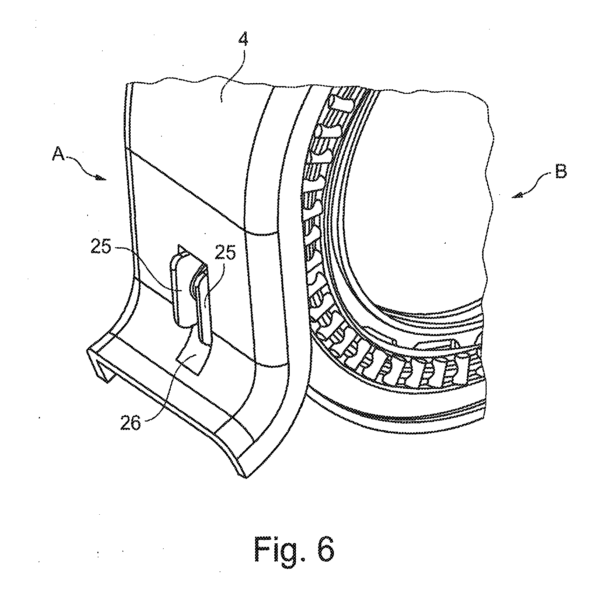

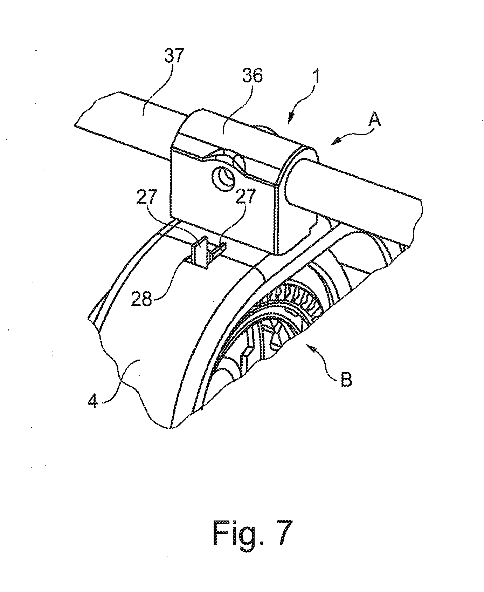

Die Verbindung der Andruckelemente 7, 8 mit dem gabelförmigen Betätigungselement 4 ist so gestaltet, dass eine Montage erst der Andruckelemente 7, 8 und anschließend des Betätigungselement 4 möglich ist. Wie insbesondere aus der Zusammenschau der Figuren 5 bis 7 hervorgeht, weisen die Andruckelemente 7, 8 radial vorstehende Laschen 25 und 27 auf. In dem Blech des Betätigungselements 4 sind Ausnehmungen 26 und 28 eingearbeitet, deren Lage zu derjenigen der Laschen 25, 27 korrespondiert. Wie nämlich in Fig. 6 und 7 gesehen werden kann, greifen die Laschen 25, 27 in die Ausnehmungen 26, 28 ein, wenn das geschwungen ausgeführte Blech des Betätigungselements 4 auf die Andruckelemente 7, 8 aufgesetzt wird. Ermöglicht wird dies, indem das Betätigungselement 4 im Endbereich der Gabel nach außen gebogen ist und so die Laschen 25 beim Aufsetzen des Betätigungselements 4 senkrecht von oben in die Ausnehmungen 26 gelangen. Dabei ist ein gewisses Spiel zwischen Laschen und Ausnehmungen erforderlich, um Toleranzen auszugleichen. Die Laschen 25 und 27 sowie die Ausnehmungen 26, 28 stellen also eine formschlüssige Verbindung zwischen den Andruckelementen 7, 8 und dem Betätigungselement 4 her, die sehr einfach montierbar ist.

Man kann die wesentlichen Konstruktionsmerkmale der vorgeschlagenen Betätigungsvorrichtung nochmals wie folgt zusammenfassen ― insbesondere mit Blick auf das beschriebene Ausführungsbeispiel:
Um eine Axialkraft auf die Außensynchronringe 2, 2' auszuüben, werden erfindungsgemäß zwei Axial-Nadellager eingesetzt, die durch zwei dünnwandige Profilscheiben 13, 14 von einer Schaltgabeleinheit verschoben werden.

Die beiden Profilscheiben 13, 14 sowie die beiden Axiallager 5, 6 werden durch den verbördelten Ring 17 als Baueinheit zusammengehalten und noch ohne Schaltgabeleinheit 4 im Getriebe verbaut. Zwischen den Axiallagern 5, 6 und den Profilscheiben 13, 14 liegt radial ein geringes Spiel vor; auch zwischen dem verbördelten Ring 17 und den Axiallagern 5, 6 ist axial ein geringes Spiel vorhanden. Hierdurch ist ein Rotieren der Axiallager 5, 6 bei deren Einsatz möglich.

Der Ring 17 dient gleichzeitig als Lagerung auf der nicht dargestellten Nabe.

Wird durch die Schaltgabeleinheit 4 eine axiale Kraft auf die Baugruppe ausgeübt, so legt sich eines der Axiallager 5, 6 an einem der Außensynchronringe 2, 2' an und beginnt zu drehen. Das Spiel zwischen dem gegenüberliegenden Axiallager und dem unbelasteten Außensynchronring 2, 2' vergrößert sich. Durch den Ring wird verhindert, dass das unbelastete Axiallager klappern kann.

Wären die beiden Profilscheiben 13, 14 eben bzw. flach, wäre die Steifigkeit der Baugruppe sehr gering, zumal beide Scheiben 13, 14 nicht fest miteinander verbunden sind, sondern nur lose aneinander liegen und durch den Ring 17 zusammengehalten werden. Die Verprägungen (Abkantungen) 21, 22, 23, 24 geben den Scheiben 13, 14 die erforderliche Steifigkeit.

Im Bereich des Eingriffs der Schaltgabel 4 (Betätigungselement) sind weitere Durchdrückungen vorgesehen, um die Deformation der "Ohren" (radial vorstehende Laschen 25, 27) bei Belastung möglichst gering zu halten. Diese Durchdrückungen können auch durch Laschen o. ä. ersetzt werden.

Die Laschen ("Ohren") 25 und 27 haben dabei zwei unterschiedliche Funktionen: Die Laschen 25 sind vorgesehen, die von dem Betätigungselement 4 eingeleitete Kraft aufzunehmen. Da der Achsabstand zwischen der Radsatzachse und der Schaltstangenachse mit größeren Toleranzen verbunden ist, wurde die Ausnehmung 26 (Vierkantloch) in dem Betätigungselement 4 länger ausgestaltet, so dass es bei einem kurzen Achsabstand nicht zum Verklemmen kommt. Die Laschen 27 haben die Aufgabe, die Baugruppe B radial in dem Betätigungselement 4 auszurichten und zu führen.

Die Schaltgabel 4 (Betätigungselement) ist im Eingriffsbereich mit der Ausnehmung 26 (Vierkantloch) in der dargestellten Weise versehen, so dass die Schaltgabeleinheit als einer der letzten Schritte bei der Getriebemontage eingebaut werden kann. Die in den Figuren dargestellte Form ermöglicht einen geschlossenen Querschnitt am Gabelende. Aber auch ein offener Querschnitt wäre bei einer Gabel mit ungebogenen Enden denkbar.

Das Vierkantloch (Ausnehmungen 26, 28) ist ausgebildet, die Profilscheiben 13, 14 axial zu bewegen, es muss allerdings radial noch gut Spiel zwischen den Laschen 25, 27 und dem Vierkantloch sein, um wie erläutert die Toleranzen der Achsabstände (Schaltwelle zu Antriebswelle) sowie die Fertigungstoleranzen der Schaltgabeleinheit ausgleichen zu können.

Um ein Rotieren der Profilscheibe 13, 14 zu verhindern, sind an deren oberen Ende die Laschen 27 angebracht, die radial zu der Ausnehmung 28 in der Schaltgabel 4 nur minimal Spiel haben. Die Laschen 27 können zur weiteren Versteifung wie bei den Laschen 25 mit Durchdrückungen o. ä. versehen werden.

### Bezugszeichenliste

- 1: Betätigungsvorrichtung
- 2: Synchronring (Außenring)
- 2': Synchronring (Außenring)
- 3: Synchronisiereinrichtung
- 4: Betätigungselement
- 5: Wälzlagerung
- 6: Wälzlagerung
- 7: Andruckelement
- 8: Andruckelement
- 9: stirnseitiger Bereich
- 10: stirnseitiger Bereich
- 11: Wälzkörper
- 12: Wälzkörper
- 13: scheibenförmiges Bauteil
- 14: scheibenförmiges Bauteil
- 15: scheibenförmiges Trägerelement (Käfig)
- 16: scheibenförmiges Trägerelement (Käfig)
- 17: Ring
- 18: zylindrischer Abschnitt
- 19: sich radial erstreckender Abschnitt
- 20: sich radial erstreckender Abschnitt
- 21: Abkantung
- 22: Abkantung
- 23: Abkantung
- 24: Abkantung
- 25,26, 27, 28: formschlüssige Verbindung
- 25: radial vorstehende Lasche
- 26: Ausnehmung
- 27: radial vorstehende Lasche
- 28: Ausnehmung
- 29: Konus
- 30: Zapfen
- 31: Zwischenring
- 32: Nut
- 33: Innenring
- 34: Verzahnung
- 35: Verzahnung
- 36: Lagerelement
- 37: Schaltstange
- 38: Abschnitt
- 39: Umbiegung
- a: Achsrichtung
- A: Baugruppe
- B: Baugruppe

## Patentansprüche

1. Betätigungsvorrichtung (1) für ein Zahnräderwechselgetriebe, mit der mindestens ein Synchronring (2, 2') einer Synchronisiereinrichtung (3) in Achsrichtung (a) einer Welle verschiebbar ist, wobei die Betätigungsvorrichtung (1) ein gabelförmiges und axial verschiebbar gelagertes Betätigungselement (4) aufweist, das ein mit mindestens einer Wälzlagerung (5, 6) versehenes Andruckelement (7, 8) axial verschieben kann, wobei die Wälzlagerung (5, 6) in einem stirnseitigen Bereich (9, 10) des Andruckelements (7, 8) angeordnet und ausgebildet ist, so dass Wälzkörper (11, 12) der Wälzlagerung (5, 6) direkt den Synchronring (2, 2') kontaktieren, wobei das Andruckelement (7, 8) zwei scheibenförmige Bauteile (13, 14) umfasst, an deren voneinander abgewandten Stirnseiten je ein Satz Wälzkörper (11, 12) anliegt, **dadurch gekennzeichnet, dass** die beiden scheibenförmigen Bauteile (13, 14) des Andruck-elements (7, 8) durch einen Ring (17) zusammengehalten werden, der einen sich in axiale Richtung (a) erstreckenden zylindrischen Abschnitt (18) sowie zwei sich radial erstreckende Abschnitte (19, 20) aufweist, die in den axialen Endbereichen des zylindrischen Abschnitts (18) angeordnet sind.

2. Betätigungsvorrichtung nach Anspruch 1, **dadurch gekennzeichnet, dass** die Wälzlagerung (5, 6) als Axialnadellager oder Axialzylinderrollenlager ausgebildet ist.

3. Betätigungsvorrichtung nach Anspruch 1, **dadurch gekennzeichnet, dass** das Andruckelement (7, 8) an seinen beiden Stirnseiten je eine Wälzlagerung (5, 6) aufweist.

4. Betätigungsvorrichtung nach Anspruch 1, **dadurch gekennzeichnet, dass** jeder Satz Wälzkörper (11, 12) von einem als Käfig fungierenden scheibenförmigen Trägerelement (15, 16) gehalten wird.

5. Betätigungsvorrichtung nach Anspruch 1, **dadurch gekennzeichnet, dass** der Ring (17) durch einen Umform- oder Umbördelvorgang in seine endgültige Form gebracht ist.

6. Betätigungsvorrichtung nach Anspruch 1, **dadurch gekennzeichnet, dass** die beiden scheibenförmigen Bauteile (13, 14) des Andruck-elements (7, 8) mindestens eine im Radialschnitt winkelförmige Abkantung (21, 22, 23, 24) aufweisen.

7. Betätigungsvorrichtung nach Anspruch 4 und 6, **dadurch gekennzeichnet, dass** das scheibenförmige Trägerelement (15. 16) mit radialem Spiel zwischen zwei Abkantungen (21, 22; 23, 24) angeordnet ist.

8. Betätigungsvorrichtung nach Anspruch 1, **dadurch gekennzeichnet, dass** das gabelförmige Betätigungselement (4) und das Andruckelement (7, 8) mit einer formschlüssigen Verbindung (25, 26, 27, 28) miteinander lösbar verbunden sind.

## Claims

1. Actuating apparatus (1) for a change speed gearbox, by way of which actuating apparatus (1) at least one synchronizer ring (2, 2') of a synchronizing device (3) can be displaced in the axial direction (a) of a shaft, the actuating apparatus (1) having a fork-shaped and axially displaceably mounted actuating element (4) which can axially displace a pressure element (7, 8) which is provided with at least one anti-friction bearing (5, 6), the anti-friction bearing (5, 6) being arranged in an end-side region (9, 10) of the pressure element (7, 8) and being configured such that rolling bodies (11, 12) of the anti-friction bearing (5, 6) are in direct contact with the synchronizer ring (2, 2'), the pressure element (7, 8) comprising two disc-shaped components (13, 14), against the end sides of which, which face away from one another, in each case one set of rolling bodies (11, 12) bears, **characterized in that** the two disc-shaped components (13, 14) of the pressure element (7, 8) are held together by a ring (17) which has a cylindrical section (18) which extends in the axial direction (a) and two radially extending sections (19, 20) which are arranged in the axial end regions of the cylindrical section (18).

2. Actuating apparatus according to Claim 1, **characterized in that** the anti-friction bearing (5, 6) is configured as an axial needle bearing or an axial cylindrical roller bearing.

3. Actuating apparatus according to Claim 1, **characterized in that** the pressure element (7, 8) has in each case one anti-friction bearing (5, 6) on its two end sides.

4. Actuating apparatus according to Claim 1, **characterized in that** each set of rolling bodies (11, 12) is held by a disc-shaped carrier element (15, 16) which acts as a cage.

5. Actuating apparatus according to Claim 1, **characterized in that** the ring (17) is brought into its final shape by way of a forming or flanging-over operation.

6. Actuating apparatus according to Claim 1, **characterized in that** the two disc-shaped components (13, 14) of the pressure element (7, 8) have at least one angled-over edge (21, 22, 23, 24) which is angular in radial section.

7. Actuating apparatus according to Claims 4 and 6, **characterized in that** the disc-shaped carrier element (15, 16) is arranged with radial play between two angled-over edges (21, 22; 23, 24).

8. Actuating apparatus according to Claim 1, **characterized in that** the fork-shaped actuating element (4) and the pressure element (7, 8) are connected releasably to one another by way of a positively locking connection (25, 26, 27, 28).

## Revendications

1. Dispositif d'actionnement (1) pour une boîte de vitesses à engrenages, avec lequel au moins une bague de synchronisation (2, 2') d'un dispositif de synchronisation (3) est déplaçable dans la direction axiale (a) d'un arbre, dans lequel le dispositif d'actionnement (1) présente un élément d'actionnement (4) en forme de fourchette et déplaçable axialement, qui peut déplacer axialement un élément de pression (7, 8) muni d'au moins un palier à roulement (5, 6), dans lequel le palier à roulement (5, 6) est disposé dans une région frontale (9, 10) de l'élément de pression (7, 8) et est configuré de telle manière que des corps de roulement (11, 12) du palier à roulement (5, 6) contactent directement la bague de synchronisation (2, 2'), dans lequel l'élément de pression (7, 8) comprend deux composants en forme de disque (13, 14), sur les faces frontales opposées l'une à l'autre desquels est respectivement appliqué un ensemble de corps de roulement (11, 12), **caractérisé en ce que** les deux composants en forme de disque (13, 14) de l'élément de pression (7, 8) sont maintenus ensemble par une bague (17), qui présente une partie cylindrique (18) s'étendant en direction axiale (a) ainsi que deux parties (19, 20) s'étendant radialement, qui sont disposées dans les régions d'extrémité axiales de la partie cylindrique (18).

2. Dispositif d'actionnement selon la revendication 1, **caractérisé en ce que** le palier à roulement (5, 6) est constitué par un roulement à aiguilles axial ou un roulement à rouleaux cylindriques axial.

3. Dispositif d'actionnement selon la revendication 1, **caractérisé en ce que** l'élément de pression (7, 8) présente respectivement un palier à roulement (5, 6) sur ses deux faces d'extrémité.

4. Dispositif d'actionnement selon la revendication 1, **caractérisé en ce que** chaque ensemble de corps de roulement (11, 12) est maintenu par un élément de support en forme de disque (15, 16) faisant office de cage.

5. Dispositif d'actionnement selon la revendication 1, **caractérisé en ce que** la bague (17) est mise à sa forme définitive par une opération de formage ou de rabattement de bord.

6. Dispositif d'actionnement selon la revendication 1, **caractérisé en ce que** les deux composants en forme de disque (13, 14) de l'élément de pression (7, 8) présentent au moins un rebord (21, 22, 23, 24) en forme d'angle en coupe radiale.

7. Dispositif d'actionnement selon la revendication 4 et 6, **caractérisé en ce que** l'élément de support en forme de disque (15, 16) est disposé avec un jeu radial entre deux rebords (21, 22; 23, 24).

8. Dispositif d'actionnement selon la revendication 1, **caractérisé en ce que** l'élément d'actionnement en forme de fourchette (4) et l'élément de pression (7, 8) sont reliés l'un à l'autre de façon séparable par une liaison par emboîtement (25, 26, 27, 28).
